# EUROPÄISCHE PATENTANMELDUNG

(11) **EP 4 212 460 A1**
(43) Veröffentlichungstag der Anmeldung: **19.07.2023**
(21) Anmeldenummer: 22216030.1
(22) Anmeldetag: 22.12.2022
(51) Int. Cl.: B65G 47/38, B07C 3/08

(54) **FAHRBARER TRANSPORTBEHÄLTER FÜR EINE SORTIERVORRICHTUNG UND VERFAHREN ZUM ÖFFNEN UND/ODER SCHLIESSEN EINES TRANSPORTBEHÄLTERS**

(30) Priorität: 14.01.2022 DE 102022100782
(71) Anmelder: BÖWE SYSTEC GmbH, 86159 Augsburg (DE)
(72) Erfinder: Hauke, Stephan, 86159 Augsburg (DE); Batzer, Josef, 86391 Stadtbergen (DE); Celeste, Ronald, 86707 Kühlenthal (DE)
(74) Vertreter: Charrier Rapp & Liebau

(57) **Zusammenfassung**

Die Erfindung betrifft einen Transportbehälter für eine Sortiervorrichtung, insbesondere für einen Fallklappensorter, umfassend einen Tragrahmen (1), mindestens eine verschwenkbar an dem Tragrahmen (1) angeordnete Klappe (2) und eine Stellvorrichtung (3), welche mit der mindestens einen Klappe (2) gekoppelt ist, um die Klappe (2) zwischen einer Transportstellung (T) zum Transportieren eines Stückguts (S) und einer Abwurfstellung (A) zum Abwerfen des Stückguts (S) zu bewegen, wobei die Stellvorrichtung (3) mindestens einen mit der mindestens einen Klappe (2) gekoppelten Stellhebel (4) umfasst.

Um den Transportbehälter zuverlässig und fehlerfrei öffnen und schließen zu können und ein Nachschwingen der geöffneten Klappe zu verhindern, sowie dabei bei mehreren Klappen eine möglichst synchrone Bewegung der Klappen sicherzustellen, ist eine am Tragrahmen (1) drehbar gelagerte Kurvenscheibe (5) mit mindestens einer Führungsfläche (6) vorgesehen, an welcher der mindestens eine Stellhebel (4) während der gesamten Bewegung der Klappe (2) von der Transportstellung (T) in die Abwurfstellung (A) und/oder während einer gesamten Rückbewegung von der Abwurfstellung (A) in die Transportstellung (T) geführt ist.

## Beschreibung

Die Erfindung betrifft einen fahrbaren Transportbehälter für eine Sortiervorrichtung nach dem Oberbegriff des Anspruchs 1, eine Sortiervorrichtung mit einem derartigen Transportbehälter, sowie ein Verfahren zum Öffnen und/oder Schließen eines solchen Transportbehälters.

Derartige Transportbehälter können bspw. in sog. Fallklappensortern (auch als Split-Tray-Sorter bezeichnet) eingesetzt werden. Dabei handelt es sich um Sortiervorrichtungen für Stückgüter, insbesondere Versandgüter, wie zum Beispiel Textilien oder Bücher. Die Transportbehälter von Fallklappensortern weisen mindestens eine Klappe, zumeist zwei oder vier Klappen auf, die schwenkbar an einem Tragrahmen angelenkt sind und zwischen einer geschlossenen Transportstellung und einer geöffneten Abwurfstellung bewegt werden können. Die zu transportierenden Stückgüter werden dabei an einer Beladestation maschinell oder manuell in der Transportstellung bei geschlossenen Klappen auf deren Oberseite aufgelegt. Die Transportbehälter werden entlang einer Transportbahn, die insbesondere als Endlosschleife ausgeführt ist, mittels eines Antriebs, bspw. einem Riemenantrieb, zu einer Abwurfstation bewegt. An der Abwurfstation werden die Klappen in die Abwurfstellung gebracht, insbesondere aufgeschwenkt, und die darauf befindlichen Stückgüter fallen schwerkraftbedingt in einen Sammelbehälter, bspw. einen Versandkarton, der an der Abwurfstation unter dem vorbeifahrenden Transportbehälter platziert ist. Die Sammelbehälter sind bei einem Fallklappensorter insbesondere unmittelbar unterhalb der vorbeifahrenden Transportbehälter platziert, wobei die auf den speziell als Bodenklappen ausgebildeten Klappen befindlichen Stückgüter an der Abwurfstation im Wesentlichen senkrecht nach unten in den Sammelbehälter fallen. Nach dem Abwurf des Stückguts werden die Klappen des Transportbehälters wieder in ihre Transportstellung gebracht, damit der Transportbehälter wieder neu mit Stückgut beschickt werden kann. Dabei können entlang der Transportbahn mehrere solcher Transportbehälter angeordnet sein, um Stückgüter von einer Beladestation zu einer vorgegebenen Abwurfstation zu transportieren.

Aus der EP 1 448 464 B1 ist eine Vorrichtung zum Transport und kontrollierten Entladen einer Last bekannt, welche in einem Transport- und Sortiersystem zum Transportieren und Sortieren von Gütern, wie z.B. von Versand- oder Postgütern, eingesetzt werden kann. Die bekannte Vorrichtung umfasst eine geschlossene Transportbahn in Form einer Endlosschleife mit einer Führung für wenigstens einen entlang der Transportbahn bewegbaren Transportbehälter und einer Antriebseinrichtung zum Bewegen des oder der Transportbehälter entlang der Transportbahn. An der Transportbahn sind dabei Lade- und Endladestationen angeordnet. An den Ladestationen werden die Transportbehälter mit zu sortierenden Gütern befüllt. Die mit den Gütern befüllten Transportbehälter können an ausgewählten Entladestationen entladen werden. Zum Be- und Entladen der Transportbehälter weisen diese eine aus einem ersten und einem zweiten Kipptrog gebildete Tragplatte auf, die zur Aufnahme der Güter dient. Die Kipptröge sind dabei verschwenkbar um parallel zueinander stehende Kippachsen an einem Rahmen befestigt und können zwischen einer Transportposition, in der die Kipptröge eine ebene Tragplatte zur Aufnahme der Güter ausbilden, und einer nach unten hängenden Entladeposition verschwenkt werden. Zum Entladen der Transportbehälter an einer Entladestation der Transportbahn können die Kipptröge in ihre Entladeposition gekippt werden, wodurch die auf der Tragplatte liegenden Güter schwerkraftbedingt nach unten in unterhalb der Transportbehälter angeordnete Aufnahmebehälter fallen. Damit beim Verschwenken der Kipptröge von ihrer Transportposition in ihre Entladeposition - und umgekehrt - beide Kipptröge gleichzeitig verschwenkt werden, ist in der bekannten Vorrichtung eine Kupplung vorgesehen, die in der Lage und geeignet ist, eine Kippbewegung des ersten Kipptrogs auf den zweiten Kipptrog zu übertragen. Die Kupplung kann dabei eine Kupplungsstange aufweisen, die mit beiden Kipptrögen in Verbindung steht und ein exzentrisches Verschwenken der Kipptröge bezüglich ihrer Kippachsen ermöglicht.

Der aus diesem Stand der Technik bekannte Kupplungsmechanismus zum gleichzeitigen Öffnen oder Schließen der Kipptröge mittels einer an beiden Kipptrögen befestigten Kupplungsstange hat sich im Betrieb, insbesondere beim Schließen der Kipptröge, als fehleranfällig und wartungsintensiv erwiesen.

Aus der WO 2021/ 043 760 A2 ist ein Transportbehälter für eine Sortiervorrichtung bekannt, welcher entlang einer Förderbahn verfahrbar ist und ein Traggestell mit zumindest einer drehbeweglich gelagerten Tragschale, insbesondere einer ersten Tragschale und einer zur ersten Tragschale in Förderrichtung des Transportbehälters nachfolgende zweite Tragschale, aufweist, wobei die zumindest eine Tragschale durch eine Stellvorrichtung zwischen einer im Wesentlichen horizontalen Transportstellung zum Transportieren einer Last und einer im Wesentlichen vertikalen Kippstellung zum Abwerfen der Last drehbeweglich ist, und die Stellvorrichtung einen mit der Tragschale verbundenen Stellhebel, insbesondere einen mit der ersten Tragschale verbundenen ersten Stellhebel und einen mit der zweiten Tragschale verbundenen zweiten Stellhebel, aufweist, wobei der Stellhebel, insbesondere jeweils der erste Stellhebel und/oder der zweite Stellhebel, in der Transportstellung und/oder in der Kippstellung in einer eine Sperrstellung bildenden Übertotpunktstellung angeordnet ist. Zur Überführung der wenigstens einen Tragschale aus der Transportstellung in die Kippstellung wird ein Schwerpunkt der Tragschale und/oder ein Schwerpunkt eines mit der Tragschale verbundenen Stellhebels zunächst angehoben und anschließend abgesenkt. Ebenso müssen die Tragschalen zum Herausbewegen aus der Kippstellung zunächst etwas weiter geöffnet werden, bevor sie nach oben in die Transportstellung bewegbar sind. Dadurch kann in der Transportstellung der ersten Tragschale und der zweiten Tragschale eine Sicherung gegen ein ungewolltes, durch eine Gewichtskraft der Last bedingtes, Öffnen der Tragschalen ermöglicht werden und in der Kippstellung verhindert die Sperrung der ersten Tragschale und der zweiten Tragschale ein Rückschwingen der Tragschalen nach dem Öffnen. Allerdings besteht bei dieser Anordnung die Gefahr eines Verklemmens der Tragschalen in der Transportstellung oder der Kippstellung, weil der oder die Stellhebel nicht aus der Übertotpunktstellung herausbewegt werden können, wenn z.B. eine erhöhte Reibkraft oder eine andere Fehlfunktion eine entsprechende Bewegung eines Stellhebels aus seiner Übertotpunktstellung verhindert.

Hiervon ausgehend liegt der Erfindung daher die Aufgabe zugrunde, einen Transportbehälter für ein Transportsystem zum Transportieren und Sortieren von Stückgütern, insbesondere von Versandgütern und Postgütern, aufzuzeigen, der über wenigstens eine verschwenkbare Klappe verfügt und ein zuverlässiges und weniger fehleranfälliges Öffnen und Schließen der Klappen gewährleistet. Dabei soll eine möglichst synchrone Bewegung der Klappen sichergestellt werden und beim Öffnen der mindestens einen Klappe von ihrer Transportstellung in ihre Abwurfstellung soll ein Nachschwingen der geöffneten Klappe verhindert werden.

Diese Aufgaben werden mit einem Transportbehälter mit den Merkmalen des Anspruchs 1 und mit dem Verfahren zum Öffnen und/oder Schließen eines Transportbehälters mit den Merkmalen des Anspruchs 13 gelöst. Bevorzugte Ausführungsformen des Transportbehälter und des Verfahrens sind den abhängigen Ansprüchen zu entnehmen.

Der erfindungsgemäße Transportbehälter, der insbesondere entlang einer Transportbahn einer Sortiervorrichtung, speziell eines Fallklappensorters, in einer vorgegebenen Transportrichtung verfahrbar angeordnet werden kann, weist wenigstens eine an einem Tragrahmen verschwenkbar angelenkte Klappe auf, welche zwischen einer geschlossenen Transportstellung, in der die Klappe einen Aufnahmeboden zur Aufnahme von Stückgütern ausbildet, und einer geöffneten Abwurfstellung zum Entladen der Güter verschwenkbar ist. Die zumindest eine Klappe ist dabei bevorzugt um eine Schwenkachse, die insbesondere senkrecht zu der vorgesehenen Transportrichtung des Transportbehälters steht, schwenkbar an dem Tragrahmen angeordnet. Zum Verschwenken der mindestens einen Klappe zwischen der Transportstellung und der Abwurfstellung ist eine mit der Klappe gekoppelte Stellvorrichtung vorgesehen, die mindestens einen Stellhebel umfasst, der insbesondere an einem Ende des Stellhebels gelenkig mit der wenigstens einen Klappe verbunden ist. Am Tragrahmen ist eine Kurvenscheibe mit mindestens einer Führungsfläche drehbar gelagert, wobei insbesondere ein anderes Ende oder ein Führungsabschnitt des mindestens einen Stellhebels während der gesamten Bewegung der Klappe von der Transportstellung in die Abwurfstellung und/oder während einer gesamten Rückbewegung von der Abwurfstellung in die Transportstellung an der Führungsfläche der Kurvenscheibe geführt ist.

Durch die Führung des mindestens einen Stellhebels an der Führungsfläche der Kurvenscheibe während der gesamten Bewegung der Klappe von der Transportstellung in die Abwurfstellung und/oder während der gesamten Rückbewegung wird die Klappe über den gesamten Bewegungsradius sicher geführt, ohne dass es zu einem Verkanten oder Verklemmen kommen kann. Damit ist die Bewegung der Klappe sowohl beim Öffnen als auch beim Schließen wenig fehleranfällig. Beim Öffnen der Klappe wird ein Zurückschwingen der Klappe vermieden, da die Klappe während der gesamten Öffnungsbewegung und auch noch bei Erreichen der geöffneten Endstellung (Abwurfstellung) durch die Führung des Stellhebels an der Führungsfläche der Kurvenscheibe sicher geführt bzw. in der Endstellung gehalten wird.

Die Führungsfläche der Kurvenscheibe ist dabei zweckmäßig so auf der Kurvenscheibe angeordnet und ausgeformt, dass der Stellhebel sowohl beim Öffnen der Klappe als auch beim Schließen der Klappe über dem gesamten Bewegungsradius an der einen Führungsfläche der Kurvenscheibe geführt wird. Es ist jedoch auch möglich, zwei zusammenhängende Führungsflächen oder Führungsflächenabschnitte auf der Kurvenscheibe vorzusehen, wobei eine Führungsfläche zum Führen des Stellhebels beim Öffnen der Klappe und die andere Führungsfläche oder der andere Führungsflächenabschnitt zum Führen des Stellhebels beim Schließen der Klappe vorgesehen ist.

In einer bevorzugten Ausführungsform umfasst der Transportbehälter eine erste Klappe und eine zweite Klappe, welche jeweils um eine (separate) Schwenkachse, die insbesondere senkrecht zu der vorgesehenen Transportrichtung des Transportbehälters steht, schwenkbar an dem Tragrahmen angeordnet sind, wobei der ersten Klappe ein erster Stellhebel und der zweiten Klappe ein zweiter Stellhebel zugeordnet ist und die Kurvenscheibe eine erste Führungsfläche zur Führung des ersten Stellhebels und eine zweite Führungsfläche zur Führung des zweiten Stellhebels aufweist. Die Ausbildung des Transportbehälters mit zwei, in Transportrichtung hintereinander angeordnete Klappen vergrößert die Auflagefläche des Transportbehälters in der Transportstellung, ohne dass das Eigengewicht der einzelnen Klappen zu schwer wird, was nachteilig beim Öffnen der Klappe sein kann, weil ein zu hohes Eigengewicht der Klappe beim Erreichen der Endposition ein Rückschwingen fördert.

Der Transportbehälter gemäß der Erfindung kann auch mehr als zwei Klappen umfassen. So ist bspw. in einer Ausführungsform vorgesehen, dass der Transportbehälter zwei in einer Richtung senkrecht zur Transportrichtung nebeneinander angeordnete Klappenpaare, also insgesamt vier Klappen, umfasst, wobei die nebeneinander angeordneten Klappen um eine gemeinsame Achse, die senkrecht zur Transportrichtung steht, drehbar gelagert sind. Wenn im Folgenden von einer Klappe, insbesondere von mindestens einer Klappe, gesprochen wird, sind damit auch mehrere Klappen eines Transportbehälters gemeint. Entsprechend kann auch nur eine Klappe gemeint sein, wenn von (mehreren) Klappen eines Transportbehälters gesprochen wird.

Wenn der Transportbehälter mehrere Klappen, insbesondere eine erste und eine zweite Klappe, umfasst, ist jeder Klappe ein Stellhebel und jedem Stellhebel eine Führungsfläche an oder auf der Kurvenscheibe zugeordnet. Die Kurvenscheibe weist also insbesondere bei zwei Klappen eine erste und eine zweite Führungsfläche auf. Bevorzugt sind die beiden Führungsflächen dabei so geformt, dass die Bewegung der beiden Klappen synchron erfolgt. Es können jedoch durch asymmetrische Anordnung oder Formung der beiden Führungsflächen an oder auf der Kurvenscheibe auch asynchrone Bewegungsabläufe realisiert werden. So ist es bspw. möglich, einen Bewegungsablauf zu erzeugen, bei dem eine der beiden Klappen früher als die andere Klappe öffnet oder schließt.

Wenn der Transportbehälter zwei senkrecht zur Transportrichtung nebeneinander angeordnete Klappenpaare mit einer ersten und einer zweiten Klappe umfasst, ist jedem Klappenpaar eine Kurvenscheibe und jeder Klappe ein Stellhebel und jedem Stellhebel eine Führungsfläche an oder auf der zugeordneten Kurvenscheibe zugeordnet, wobei jede Kurvenscheibe zwei Führungsflächen umfasst. Die beiden Kurvenscheiben können dabei bspw. seitlich an beiden Seiten des Transportbehälters angeordnet sein.

Die Kurvenscheibe ist bevorzugt durch ein Federelement in einer Grundposition vorgespannt, wobei sich die mindestens eine Klappe in der Grundposition der Kurvenscheibe in ihrer Transportstellung befindet. Dadurch wird ermöglicht, dass sich der Transportbehälter nach einem Entladen durch Abwurf der Stückgüter selbsttätig in seine Transportstellung zurückbewegt.

In der Transportstellung ist die Kurvenscheibe bevorzugt durch ein Sicherungselement, insbesondere durch eine vorgespannte Klinke, in ihrer Grundposition gehalten. Dies stellt sicher, dass die Klappe in ihrer Transportstellung sicher fixiert ist und sich nicht ungewollt öffnen kann. Zum Öffnen der Klappe wird das Sicherungselement in einer nachfolgend noch im Detail beschriebenen Weise entsichert, wodurch sich die Klappe schwerkraftbedingt selbsttätig in ihre Abwurfstellung bewegt. Zur Entsicherung des Sicherungselements ist zweckmäßig ein Auslöseelement vorgesehen, welches insbesondere an der Transportbahn der Sortiervorrichtung angeordnet ist und welches das Sicherungselement löst, wenn der Transportbehälter in der Transportrichtung an dem Auslöseelement vorbeifährt. Das Auslöseelement ist insbesondere stromaufwärts einer Abwurfposition der Transportbahn der Sortiervorrichtung angeordnet, an welcher der Transportbehälter ein transportiertes Stückgut durch Bewegung der mindestens einen Klappe oder j eder Klappe in die Abwurfstellung abwirft. Hierfür wird das Auslöseelement bevorzugt von einem Aktor von einer passiven Grundstellung in eine aktive Funktionsstellung verschoben, in welches das Auslöseelement in die Transportbahn eingreift und zur Entsicherung des Sicherungselements an diesem angreift. Der Aktor kann bspw. magnetbetätigt sein. Zweckmäßig ist das Auslöseelement als beweglicher Bolzen ausgebildet, der von dem Aktor zwischen der passiven Grundstellung und der aktiven Funktionsstellung hin und her bewegt werden kann.

In einer bevorzugten Ausführungsform enthält der mindestens eine Stellhebel, insbesondere der erste Stellhebel und der zweite Stellhebel, ein Führungselement, das zweckmäßig als Führungsrolle ausgebildet ist. Das Führungselement des Stellhebels oder jedes Stellhebels ist während der gesamten Bewegung der dem Stellhebel zugeordneten Klappe, insbesondere der ersten Klappe und/oder der zweiten Klappe, von der Transportstellung in die Abwurfstellung und/oder während der gesamten Rückbewegung in Kontakt mit der zugeordneten Führungsfläche der Kurvenscheibe, insbesondere der ersten Führungsfläche oder der zweiten Führungsfläche. Das Führungselement ist dabei bspw. an einem Führungsarm des oder jedes Stellhebels angeordnet. Durch das Führungselement wird eine sichere und geräuscharme Führung des Stellhebels an der Kurvenscheibe gewährleistet. Um eine Geräuschentwicklung noch weiter zu reduzieren, kann das Führungselement als Führungsrolle mit einer elastischen Umfangsfläche, bspw. mit einem gummierten Umfang, ausgebildet sein.

Die mindestens eine Führungsfläche der Kurvenscheibe, insbesondere die erste Führungsfläche und die zweite Führungsfläche, ist zweckmäßig durch einen Vorsprung oder einen Rücksprung an der Oberfläche der Kurvenscheibe ausgebildet. Die Führungsfläche kann jedoch auch am Außenumfang der Kurvenscheibe ausgebildet sein. Eine Ausbildung der oder jeder Führungsfläche an einem Rücksprung der Kurvenscheibe, insbesondere in einer Ausnehmung an der Oberfläche der Kurvenscheibe, hat den Vorteil, dass der zugeordnete Stellhebel und insbesondere das Führungselement des Stellhebels, sicher an der Führungsfläche zur Anlage kommt und dass der Stellhebel dadurch sicher in dem Rücksprung an der Oberfläche der Kurvenscheibe gelagert ist und nicht herausrutschen kann. Daher ist die mindestens eine Führungsfläche, insbesondere die erste Führungsfläche und die zweite Führungsfläche, bevorzugt Bestandteil einer Ausnehmung oder einer Öffnung in der Kurvenscheibe.

Besonders bevorzugt weist die mindestens eine Führungsfläche, insbesondere die erste Führungsfläche und die zweite Führungsfläche, einen Führungsbereich und mindestens einen Haltebereich auf, wobei der Führungsbereich insbesondere gebogen, bspw. leicht konvex gewölbt ausgebildet ist und der Haltebereich zweckmäßig teilkreisförmig, insbesondere halbkreisförmig ausgebildet ist. Dabei ist der Haltebereich bevorzugt in Bezug auf den Führungsbereich zurückversetzt. Während der Bewegung der mindestens einen Klappe von der Transportstellung in die Abwurfstellung, oder umgekehrt, liegt der zugeordnete Stellhebel, insbesondere das Führungselement des Stellhebels, an dem Führungsbereich der Führungsfläche an. In den Endstellungen, also insbesondere in der Transportstellung und/oder in der Abwurfstellung, befindet sich das Führungselement des Stellhebels zweckmäßig in einem Haltebereich, wo das Führungselement, bspw. eine Führungsrolle, über einen wesentlichen Abschnitt seines Umfangs, der bevorzugt mindestens die Hälfte des Umfangs beträgt, an dem Haltebereich der Führungsfläche anliegt.

Dadurch wird gewährleistet, dass der Stellhebel einerseits während der gesamten Bewegung der zugeordneten Klappe sicher an dem Führungsbereich der zugeordneten Führungsfläche geführt wird, während sich die Kurvenscheibe dreht, und dass der Stellhebel andererseits bei Erreichen einer Endstellung (Transportstellung oder Abwurfstellung), in der die Drehung der Kurvenscheibe gestoppt wird, sicher im Haltebereich der Führungsfläche gehalten werden kann. Der Haltebereich ist dabei zweckmäßig so geformt, dass das Führungselement des Stellhebels über einen bestimmten Umfang, der bevorzugt mindestens die Hälfte seines Umfangs beträgt, an dem Haltebereich anliegt, wenn sich die Klappe und der zugeordnete Stellhebel in einer Endstellung (Transportstellung oder Abwurfstellung) befinden. Der Haltebereich der Führungsfläche kann hierfür bspw. teilkreisförmig, insbesondere halbkreisförmig oder dreiviertelkreisförmig, ausgebildet sein.

Zum Zurückbewegen der mindestens einen Klappe von der Abwurfstellung in die Transportstellung ist eine Kulissensteuerung mit einer Kulisse vorgesehen, welche mit einem an der Kurvenscheibe angeordneten Anschlagelement zusammenwirkt. Die Kulisse ist zweckmäßig an der Transportbahn der Sortiervorrichtung angeordnet, insbesondere stromabwärts einer Abwurfposition, an welcher der Transportbehälter das transportierte Stückgut durch Bewegung der oder jeder Klappe in die Abwurfstellung abwirft. Wenn der geleerte Transportbehälter stromabwärts der Abwurfposition an der Kulisse vorbeifährt, kommt das Anschlagelement der Kurvenscheibe in Anlage an einer Anschlagfläche der Kulisse, wodurch die Kurvenscheibe in Drehung versetzt und der Transportbehälter zurück in seine Transportstellung gebracht wird. Hierfür ist das Anschlagelement bevorzugt exzentrisch auf der Kurvenscheibe angeordnet. Die Kulisse umfasst hierfür zweckmäßig eine Rampe mit einer zu einer horizontalen Ebene geneigten oder gewölbten Anschlagfläche, an der das Anschlagelement der Kurvenscheibe zur Anlage kommt, wenn der Transportbehälter in der vorgesehenen Transportrichtung an der Kulisse vorbeifährt. Durch das Zusammenwirken der Kulisse und des Anschlagelements wird die Kurvenscheibe somit in Drehung versetzt, wenn der Transportbehälter an der Kulisse vorbeifährt.

In dem erfindungsgemäßen Verfahren zum Öffnen und/oder Schließen eines Transportbehälters für eine Sortiervorrichtung, insbesondere für einen Fallklappensorter, wird der Transportbehälter von einer Transportstellung zum Transportieren eines Stückguts in eine Abwurfstellung zum Abwerfen des Stückguts oder zurück bewegt, indem eine an einem Tragrahmen drehbar gelagerte Kurvenscheibe mit mindestens einer Führungsfläche in Drehung versetzt wird, wodurch mindestens eine verschwenkbar an dem Tragrahmen angeordnete Klappe, die mit einem Stellhebel gekoppelt, insbesondere direkt bzw. unmittelbar gelenkig verbunden ist, geöffnet oder geschlossen wird, wobei der Stellhebel während der gesamten Bewegung der Klappe von der Transportstellung in die Abwurfstellung und/oder während der gesamten Rückbewegung von der Abwurfstellung in die Transportstellung an der Führungsfläche geführt wird.

Die Kurvenscheibe ist dabei um eine Drehachse drehbar an dem Tragrahmen gelagert und bevorzugt in einer Grundposition, in der sich die Klappe in ihrer Transportstellung befindet, vorgespannt und zweckmäßig in dieser Grundposition verriegelt. Die Vorspannung ist bspw. über ein Spann- oder Federelement realisiert, welches an einem Ende exzentrisch an der Kurvenscheibe und an einem anderen Ende am Tragrahmen befestigt ist. Die Verriegelung der Kurvenscheibe in ihrer Grundposition wird bspw. über eine vorgespannte Klinke erzeugt, welche in eine Rastnut an der Kurvenscheibe eingreift, wenn sich die Kurvenscheibe in ihrer Grundposition befindet.

Zum Öffnen des Transportbehälters wird die verriegelte Kurvenscheibe entriegelt, indem bspw. die Klinke gelöst wird, wodurch sich die Kurvenscheibe selbsttätig aufgrund der Vorspannung in einer ersten Drehrichtung in Drehung versetzt und die mindestens eine Klappe aufgrund der Kopplung der Klappe mit dem mindestens einen Stellhebel und der Führung des Stellhebels an der zugeordneten Führungsfläche von der Transportstellung in die Abwurfstellung bewegt wird. Die selbsttätige Drehung der Kurvenscheibe in der ersten Drehrichtung wird dabei durch die Vorspannung, welche einen Drehimpuls auf die Kurvenscheibe in der ersten Drehrichtung überträgt, eingeleitet und schwerkraftbedingt durch das Eigengewicht der Klappe und der Last des sich darauf befindlichen Stückguts unterstützt. Dies stellt sicher, dass sich die Klappe selbsttätig in die Abwurfstellung bewegt, sobald die Kurvenscheibe entriegelt wird.

Zum Schließen des Transportbehälters wird die Kurvenscheibe bevorzugt von einer an einem exzentrischen Anschlagelement angreifenden Kulissenführung in einer zweiten Drehrichtung entgegengesetzt zur ersten Drehrichtung in Drehung versetzt, wodurch die mindestens eine Klappe aufgrund der Kopplung mit dem zugeordneten Stellhebel und der Führung des Stellhebels an der zugeordneten Führungsfläche von der Abwurfstellung in die Transportstellung bewegt wird. Das Anschlagelement der Kurvenscheibe bleibt dabei bevorzugt solange in Eingriff mit der Kulissenführung, bis die Kurvenscheibe in ihrer Grundposition angelangt und dort verriegelt worden ist. Dies stellt sicher, dass die Kurvenscheibe entgegen des von der Vorspannung erzeugten Drehimpulses sicher in ihre Grundposition bewegt werden kann und die Klappe nach Erreichen ihrer Transportstellung sicher in der Transportstellung gehalten wird.

Sowohl beim Öffnen als auch beim Schließen des Transportbehälters wird der Stellhebel sicher an der zugeordneten Führungsfläche der Kurvenscheibe geführt, wobei die Führung über den gesamten Bewegungsradius der Kurvenscheibe bzw. der mit dem Stellhebel gekoppelten Klappe erfolgt.

Der erfindungsgemäße Transportbehälter kann vorteilhaft in Transport- und Sortiersystemen für Stückgüter, insbesondere zum Transportieren und Sortieren von Versand- oder Postgütern, eingesetzt werden, welche eine Transportbahn und wenigstens einen entlang der Transportbahn in einer vorgegebenen Transportrichtung verfahrbaren Transportbehälter umfassen, wobei der oder die Transportbehälter von einem Antrieb entlang der Transportbahn in Bewegung gesetzt werden und wenigstens ein Transportbehälter ein Transportbehälter gemäß der Erfindung ist. Zweckmäßig ist die Transportbahn dabei als Endlosschleife ausgebildet.

Das Transport- und Sortiersystem verfügt dabei zweckmäßig über eine Führungs- und Antriebseinrichtung zur Führung und zum Antrieb des wenigstens einen Transportbehälters. Die Führungs- und Antriebseinrichtung kann beispielsweise als Riemen- oder Kettenantrieb ausgebildet sein, wobei die entlang der Transportbahn verfahrbaren Transportbehälter mit dem von einem Motor in Bewegung gesetzten Riemen bzw. der Kette verbunden sind. Zur Führung der Transportbehälter ist in dem Transport- und Sortiersystem zweckmäßig wenigstens eine Führungsschiene vorgesehen. Der Transportbehälter weist zur Führung an der Führungsschiene zweckmäßig Führungsrollen auf.

An der Transportbahn des Transport- und Sortiersystems sind mindestens eine Ladestation und eine Entladestation angeordnet. In der Ladestation können die Transportbehälter mit den zu transportierenden Gütern beladen werden und die Transportbehälter können die Güter an der Endladestation in einen Aufnahmebehälter entladen, indem der Transportbehälter an der Entladestation durch Bewegung mindestens einer Klappe in ihre Abwurfstellung geöffnet wird.

Ein erfindungsgemäßer Fallklappensorter umfasst zumindest einen, bevorzugt mehrere der erfindungsgemäßen Transportbehälter. Die Transportbehälter werden entlang einer Transportbahn, die insbesondere als Endlosschleife ausgebildet ist, des Fallklappensorters bewegt. An einer Beladestation werden dabei die zu transportierenden Stückgüter maschinell oder manuell auf die Oberseite der einen oder mehreren als Bodenklappe ausgebildeten bzw. einen Boden bildenden Klappen des in Transportstellung angeordneten Transportbehälters aufgelegt. Anschließend werden die Transportbehälter zu einer Abwurfstation bewegt, an der die Klappen in die Abwurfstellung gebracht, insbesondere aufgeschwenkt, werden, wodurch die darauf befindlichen Stückgüter schwerkraftbedingt und im Wesentlichen senkrecht in einen unmittelbar unterhalb der vorbeifahrenden Transportbehälter platzierten Sammelbehälter fallen. Hierin unterscheidet sich der Fallklappensorter insbesondere von einem Kippsorter, bei denen ein Transportbehälter bzw. die Ablage eines Transportbehälters zum Ausbringen des Stückguts nach rechts und/oder links in Bezug auf die Transportrichtung des Transportbehälters gekippt wird, wodurch die Stückgüter in rechts und/oder links des Transportbehälters angeordnete Sammelbehälter abgekippt werden. Nach einem Abwerfen der Stückgüter an der Abwurfstation des Fallklappensorters werden die Klappen wieder geschlossenen und zur Aufnahme eines neuen Stückguts zu der Beladestation geführt.

Diese und weitere Vorteile und Merkmale der Erfindung ergeben sich aus dem nachfolgend unter Bezugnahme auf die begleitenden Zeichnungen näher beschriebenen Ausführungsbeispiel. Die Zeichnungen zeigen:
- **Fig. 1A:**: Seitenansicht eines Transportbehälters gemäß der Erfindung in einer Transportstellung T mit geschlossenen Klappen, wobei der Transportbehälter eine Stellvorrichtung und eine Kurvenscheibe enthält und die Ansicht des Transportbehälters mit Blickrichtung auf eine Außenseite der Kurvenscheibe dargestellt ist;
- **Fig. 1B:**: Seitenansicht des Transportbehälters von Figur 1A mit Blickrichtung auf eine Innenseite der Kurvenscheibe;
- **Fig. 1C:**: Detaildarstellung der Stellvorrichtung des Transportbehälters von Figur 1A;
- **Fig. 1D:**: Detaildarstellung der Stellvorrichtung des Transportbehälters in der Blickrichtung von Figur 1B;
- **Fig. 2:**: Darstellung der Schritte zum Öffnen der Klappen des Transportbehälters der Figuren 1A und 1B von der Transportstellung T (Figur 2a) in eine Abwurfstellung A (Figur 2e), wobei der Transportbehälter jeweils links in einer Seitenansicht mit der Blickrichtung von Figur 1A und rechts in einer Seitenansicht mit der Blickrichtung von Figur 1B gezeigt ist;
- **Fig. 3:**: Darstellung der Schritte zum Schließen der Klappen des Transportbehälters der Figuren 1A und 1B von der Abwurfstellung A (Figur 3a) zurück in die Transportstellung T (Figur 3e), wobei der Transportbehälter jeweils links in einer Seitenansicht mit der Blickrichtung von Figur 1A und rechts in einer Seitenansicht mit der Blickrichtung von Figur 1B gezeigt ist;

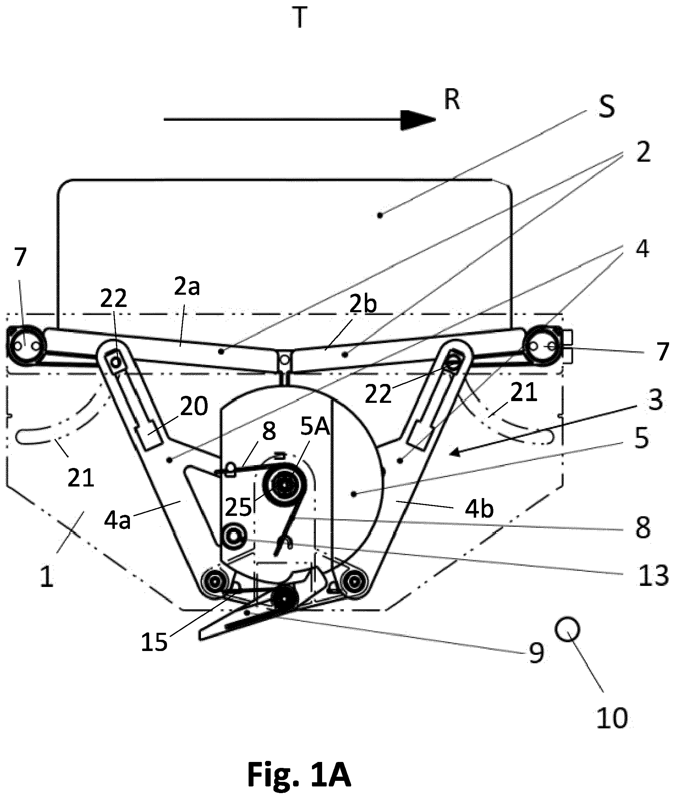

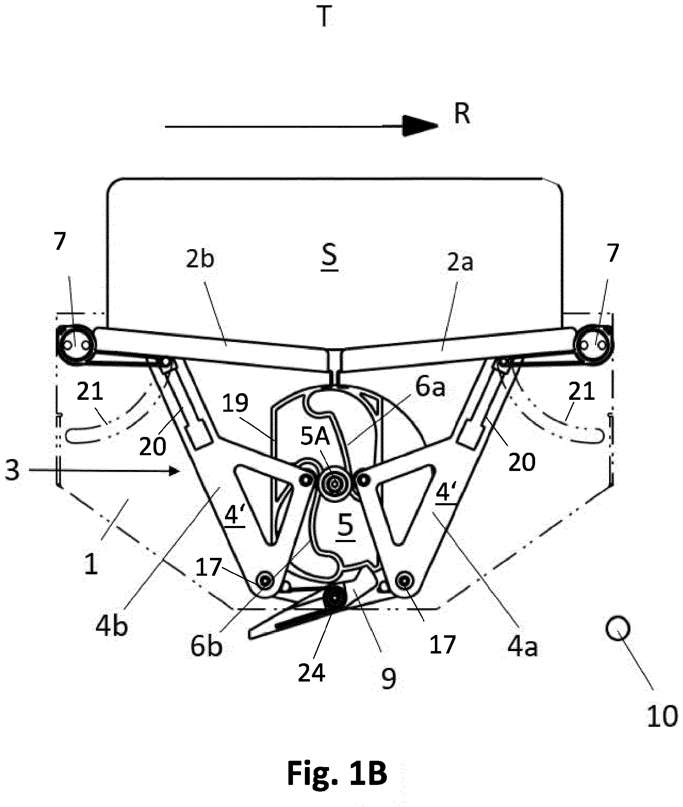

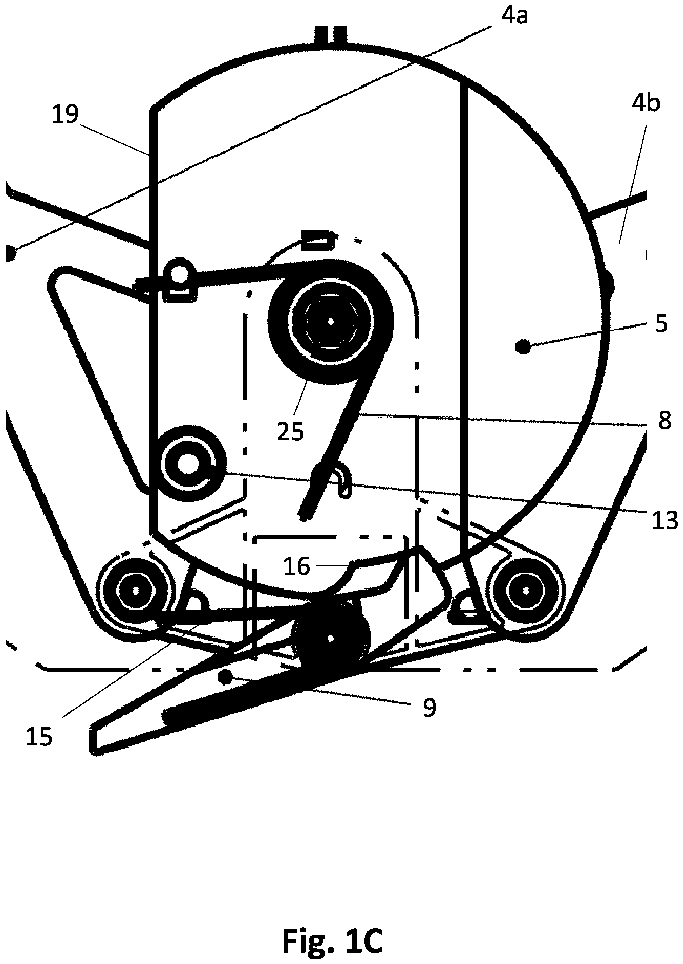

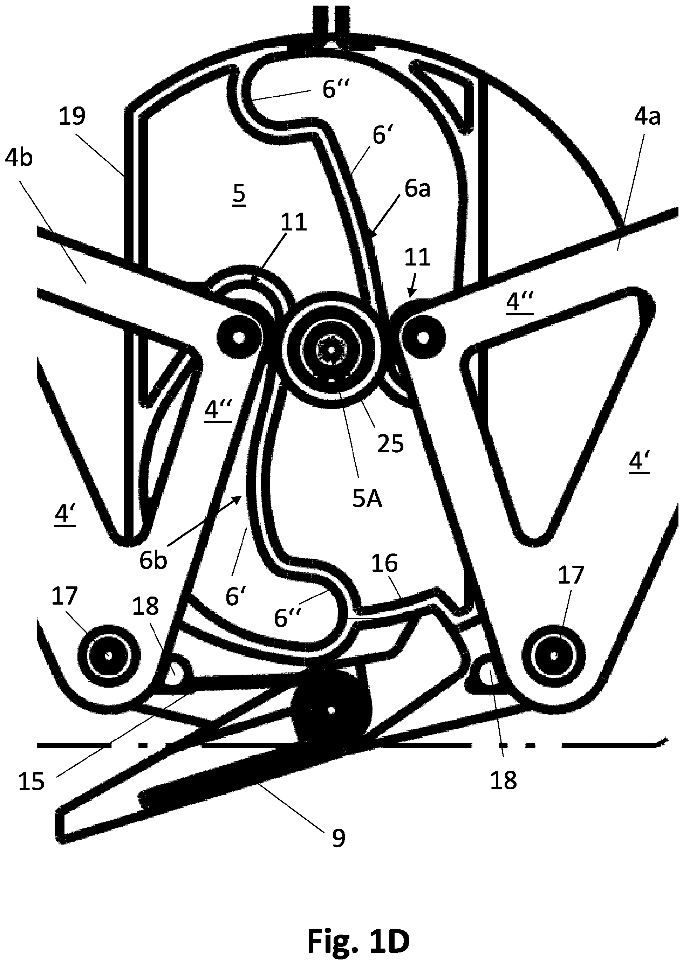

In den Figuren 1A und 1B ist eine bevorzugte Ausführungsform eines erfindungsgemäßen Transportbehälters gezeigt, wobei die Figuren 1A und 1B den Transportbehälter in einer Seitenansicht in unterschiedlichen Blickrichtungen und die Figuren 1C und 1D Detaildarstellungen der Stellvorrichtung des Transportbehälters zeigen. Die Blickrichtung der Figuren 1A und 1C ist dabei in einer Seitenansicht des Transportbehälters von außen nach innen gerichtet und die Blickrichtung der Darstellungen der Figuren 1B und 1D ist entgegen dieser Blickrichtung von innen nach außen gerichtet, also gegenüber der Blickrichtung der Figuren 1A und 1C um 180° gedreht.

Der in den Figuren 1A und 1B gezeigte Transportbehälter umfasst einen Tragrahmen 1 mit einer in den Figuren 1A und 1B gestrichelt dargestellten Seitenwand sowie zwei am Tragrahmen 1 verschwenkbar angeordnete Klappen 2, nämlich eine erste Klappe 2a und eine zweite Klappe 2b. Der Transportbehälter ist entlang einer Transportbahn eines Transport- und Sortiersystems in einer Transportrichtung R verfahrbar angeordnet. Die beiden Klappen 2a, 2b, welche nachfolgend auch gemeinsam mit dem Bezugszeichen 2 bezeichnet werden, sind jeweils um Schwenkachsen 7 an dem Tragrahmen 1 verschwenkbar angelenkt. Die beiden Klappen 2 können dabei zwischen einer in den Figuren 1A und 1B gezeigten Transportstellung T und einer Abwurfstellung A verschwenkt werden. In der Transportstellung T befinden sich die beiden Klappen 2 zumindest annähernd in einer horizontalen Lage und bilden eine Auflagefläche zur Aufnahme eines Stückguts S.

Jede der beiden Klappen 2 ist gelenkig mit einem der jeweiligen Klappe 2a, 2b zugeordneten Stellhebel 4a, 4b verbunden, wobei der ersten Klappe 2a ein erster Stellhebel 4a und der zweiten Klappe 2b ein zweiter Stellhebel 4b zugeordnet ist. Die Stellhebel 4a, 4b umfassen jeweils einen Längsabschnitt 4', der sich zwischen einem oberen Ende und einem unteren Ende des jeweiligen Stellhebels 4a, 4b erstreckt, sowie einen dreieckförmigen Führungsabschnitt 4", der an dem jeweiligen Längsabschnitt 4' der Stellhebel 4a, 4b angeformt ist. Im Bereich des oberen Endes weist der Längsabschnitt 4' jedes Stellhebels 4a, 4b ein längs des Längsabschnitts 4' verlaufendes, gerades Langloch 20 auf. In dieses Langloch 20 greift ein Zapfen 22 ein, der an der Unterseite der dem jeweiligen Stellhebel 4a, 4b zugeordneten Klappe 2a, 2b befestigt ist. Der an der Unterseite jeder Klappe 2a, 2b angeordnete Zapfen 22 ist weiterhin in einem oberen, gebogenen Langloch 21 des Tragrahmens 1 geführt. Am unteren Ende des Längsabschnitts 4' jedes Stellhebels 4a, 4b ist weiterhin ein Führungszapfen 17 angeordnet, der in ein weiteres, unteres Langloch 18 am Tragrahmen 1 eingreift. Durch diese Anordnung ist der erste Stellhebel 4a gelenkig mit der ersten Klappe 2a gekoppelt und der zweite Stellhebel 4b ist gelenkig mit der zweiten Klappe 2b gekoppelt.

An der in Figur 1B zur Kurvenscheibe 5 weisenden Ecke des dreieckförmigen Führungsabschnitts 4" jedes Stellhebels 4a, 4b ist ein Führungselement in Form einer Führungsrolle 11 angeordnet. Die Führungsrollen 11 weisen zweckmäßig an ihrem Außenumfang eine geräuschdämmende elastische Oberfläche auf, bspw. eine Gummi- oder Kunststoffbeschichtung.

Unterhalb der beiden Klappen 2a, 2b ist am Tragrahmen 1 eine Kurvenscheibe 5 um eine Drehachse 5A drehbar angeordnet. Hierfür enthält die Kurvenscheibe 5 eine entlang der Drehachse 5A verlaufende Welle 25, die an der Außenseite der Kurvenscheibe 5 über deren Oberfläche vorsteht. Die Drehachse 5A der Kurvenscheibe 5 verläuft dabei parallel zu den Schwenkachsen 7 der beiden Klappen 2 und liegt zumindest ungefähr symmetrisch zu diesen beiden Schwenkachsen 7. Die Kurvenscheibe 5 ist in etwa dreiviertelkreisförmig ausgebildet und weist seitlich einen abgeflachten Abschnitt sowie eine Außenseite und eine Innenseite auf, wobei die in Figur 1A gezeigte Außenseite seitlich an dem Transportbehälter nach außen weist und die in Figur 1B gezeigte Innenseite nach innen gerichtet ist. Die Kurvenscheibe 5 kann auch als Kreisscheibe ausgebildet sein. An der in Figur 1A gezeigten Außenseite der Kurvenscheibe 5 ist ein Anschlagelement 13 in Form eines Zapfens angeordnet, der über der außenseitigen Oberfläche der Kurvenscheibe 5 vorsteht und exzentrisch zur Drehachse 5A liegt.

Die Kurvenscheibe 5 weist an ihrer Innenseite, die in der Ansicht von Figur 1B ersichtlich ist, zwei in etwa bananenförmig geformte und voneinander beabstandete Rücksprünge auf, deren Seitenflächen jeweils eine Führungsfläche 6a, 6b ausbilden. Dabei ist eine erste Führungsfläche 6a dem ersten Stellhebel 4a zugeordnet, welcher an der ersten Klappe 2a gelenkig befestigt ist, und eine zweite Führungsfläche 6b ist dem zweiten Stellhebel 4b zugeordnet, der an der zweiten Klappe 2b gelenkig angeordnet ist. Die Führungsrolle 11 des ersten Stellhebels 4a liegt dabei an der ersten Führungsfläche 6a der Kurvenscheibe 5 an und entsprechend liegt die Führungsrolle 11 des zweiten Stellhebels 4b an der zugeordneten zweiten Führungsfläche 6b der Kurvenscheibe 5 an, wie aus den Figuren 1B und 1D ersichtlich.

Die Führungsflächen 6a, 6b setzen sich jeweils aus drei Abschnitten zusammen, nämlich einem in den Figuren 1B und 1D bei der ersten Führungsfläche 6a oben und bei der zweiten Führungsfläche 6b unten positionierten ersten Halteabschnitt 6", einem sich daran anschließenden Führungsabschnitt 6' und einem weiteren Halteabschnitt, der in den Figuren 1B und 1D bei der ersten Führungsfläche 6a unten und bei der zweiten Führungsfläche 6b oben positioniert ist. Der Führungsabschnitt 6' ist dabei konvex gebogen und die Halteabschnitte 6" sind teilkreisförmig, insbesondere halbkreisförmig oder dreiviertelkreisförmig, ausgebildet, wie aus Figur 1D erkennbar. Der erste Halteabschnitt 6" ist dabei in Bezug auf den sich daran anschließenden, gebogenen Führungsabschnitt 6' zurückversetzt.

Am Außenumfang der Kurvenscheibe 5 ist eine nutförmige Einkerbung 16 vorgesehen. In der in den Figuren 1A und 1B gezeigten Transportstellung T greift ein mittels eines Federelements 15 vorgespanntes Sicherungselement, welches als am Tragrahmen 1 um eine Drehachse 24 drehbar befestigte Klinke 9 ausgebildet ist, in die Einkerbung 16 ein, wodurch die Kurvenscheibe 5 in einer Grundposition, die in den Figuren 1A und 1B dargestellt ist, gehalten wird.

Die Kurvenscheibe 5 ist mittels eines Spann- oder Federelements 8 in der Grundposition vorgespannt. In dem gezeigten Ausführungsbeispiel ist das Spann- oder Federelement 8 durch ein elastisches Band gebildet, welches an zwei exzentrisch angeordneten Befestigungspunkten an der Außenseite der Kurvenscheibe 5 befestigt und unter Spannung über die vorstehende Welle 25 der Kurvenscheibe 5 geführt ist.

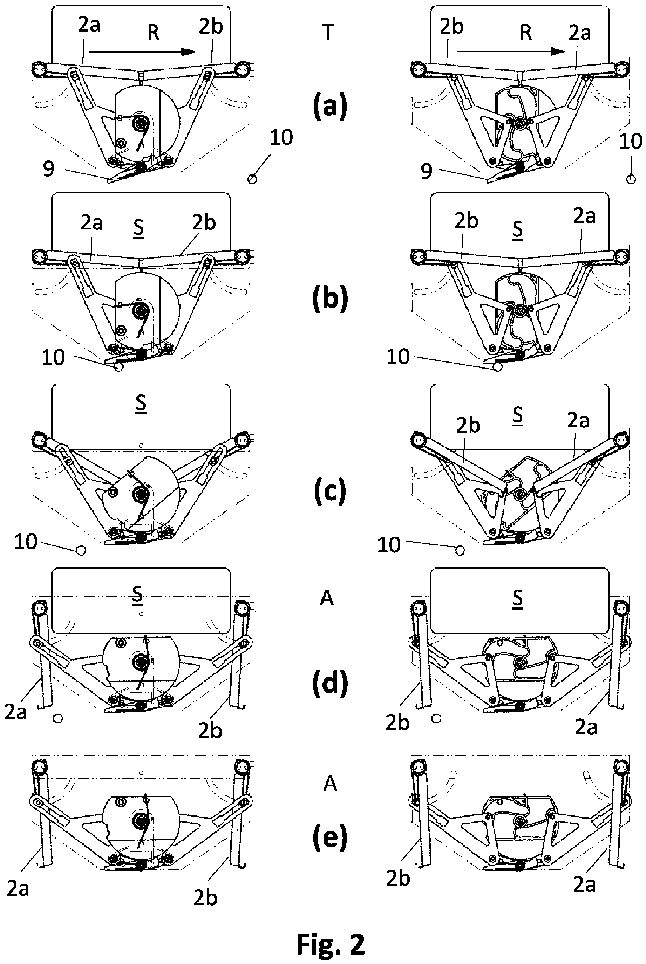

Der in den Figuren 1A und 1B gezeigte Transportbehälter kann wie nachfolgend anhand der Figur 2 dargestellt von der in Figur 1A und Figur 1B gezeigten Transportstellung T in eine Abwurfstellung A gebracht werden, um ein in der Transportstellung T auf der Oberfläche der beiden Klappen 2 aufgelegtes Stückgut S an einer Entladestation des Transport- und Sortiersystems abwerfen zu können:
In der in Figur 2a gezeigten Transportstellung T, in der sich ein Stückgut S auf der Oberseite der beiden geschlossenen Klappen 2 befindet, wird der Transportbehälter in Transportrichtung R entlang einer Transportbahn des Transport- und Sortiersystems bewegt. An der Transportbahn ist ein von einem nicht gezeigten Aktor zwischen einer passiven Grundstellung und einer aktiven Funktionsstellung bewegliches Auslöseelement 10 angeordnet. Wenn sich das Auslöseelement 10 in seiner aktiven Funktionsstellung befindet, greift das Auslöseelement 10 in den Transportweg des Transportbehälters entlang der Transportbahn ein und kommt mit der Klinke 9 in Kontakt, wenn der Transportbehälter an dem Auslöseelement 10 vorbeifährt, wie in Figur 2b dargestellt. Beim Vorbeifahren des Transportbehälters an dem Auslöseelement 10 wird der nach unten ragende Endabschnitt der Klinke 9 durch das Auslöseelement 10 nach oben gedrückt, wodurch sich die Klinke 9 in Drehung versetzt und sich aus der Einkerbung 16 am Außenumfang der Kurvenscheibe 5 heraus bewegt. Dadurch wird die Kurvenscheibe 5 entsichert und setzt sich aufgrund der Vorspannung der Kurvenscheibe 5 durch das Spann- oder Federelement 8 in einer ersten Drehrichtung in Rotation. Die erste Drehrichtung ist dabei in Blickrichtung der Figur 1A im Uhrzeigersinn und in Blickrichtung der Figur 1B entgegen dem Uhrzeigersinn gerichtet.

In Figur 2c ist eine Zwischenstellung gezeigt, in der sich die Kurvenscheibe 5 bereits um einen Winkel von ca. 45° aus ihrer Grundposition heraus bewegt hat. Bei der Drehung der Kurvenscheibe 5 rollen die Führungsrollen 11 der beiden Stellhebel 4a, 4b jeweils an der zugeordneten Führungsfläche 6a bzw. 6b der Kurvenscheibe 5 ab. Durch die Drehbewegung der Kurvenscheibe 5 wird der Führungsabschnitt 4' der beiden Stellhebel 4a, 4b jeweils, von der Kurvenscheibe 5 aus betrachtet, radial nach außen bewegt, wodurch die Zapfen 22 an der Unterseite der beiden Klappen 2a, 2b einerseits in dem teilkreisförmig gebogenen Langloch 21 nach unten und nach außen und andererseits in dem geraden Langloch 20 des Längsabschnitts 4' des jeweils zugeordneten Stellhebels 4a, 4b nach unten laufen. Dadurch wird die jeweilige Klappe 2a, 2b aus ihrer geschlossenen Position in eine Zwischenposition bewegt, wie in Figur 2c dargestellt.

Bei weiterer Drehung der Kurvenscheibe 5 in die in Figur 2d gezeigte Endstellung werden die beiden Klappen 2a, 2b vollständig geöffnet. In dieser Endstellung der Klappen 2, welche die Abwurfstellung A darstellt, stehen die beiden Klappen 2a, 2b in etwa in einer vertikalen Richtung und die Zapfen 22 an der Unterseite der Klappen 2a, 2b liegen jeweils am unteren/äußeren Ende des gebogenen Langlochs 21 an.

Die Führungsrollen 11 des ersten Stellhebels 4a und des zweiten Stellhebels 4b haben sich dabei entlang des gebogenen Führungsabschnitts 6' der ersten bzw. der zweiten Führungsfläche 6a, 6b in den ersten Halteabschnitt 6" dieser Führungsflächen bewegt. In der Endposition der Figur 2d, in der sich die beiden Klappen 2a, 2b in ihrer Abwurfstellung A befinden, liegen die Führungsrollen 11 des ersten Stellhebels 4a und des zweiten Stellhebels 4b am ersten Halteabschnitt 6" der ersten Führungsfläche 6a bzw. der zweiten Führungsfläche 6b an, wie aus Figur 2d ersichtlich. Während der Bewegung der beiden Klappen 2a, 2b von ihrer Transportstellung T (die in Figur 2a gezeigt ist) in ihre Abwurfstellung A (die in Figur 2d gezeigt ist) liegen die Führungsrollen 11 des ersten Stellhebels 4a und des zweiten Stellhebels 4b jeweils an der zugeordneten Führungsfläche 6a, 6b der Kurvenscheibe 5 an und werden dadurch von der Kurvenscheibe 5 geführt. Durch die Bewegung der beiden Klappen 2a, 2b von der geschlossenen Stellung (Transportstellung T gemäß Figur 2a) in ihre offene Stellung (Abwurfstellung A, gemäß Figur 2d) fällt das in der Transportstellung T auf der Oberseite der beiden Klappen 2a, 2b aufliegende Stückgut S schwerkraftbedingt nach unten und wird dadurch aus dem Transportbehälter in einen sich in einer Entladestation unterhalb des vorbeifahrenden Transportbehälters befindlichen Sammelbehälter abgeworfen, wie in Figur 2e gezeigt. Dabei werden die beiden Klappen 2 durch ihr Eigengewicht und durch die Lagerung der Führungsrollen 11 in den Halteabschnitten 6" der Führungsflächen 6a, 6b in der geöffneten Stellung gehalten.

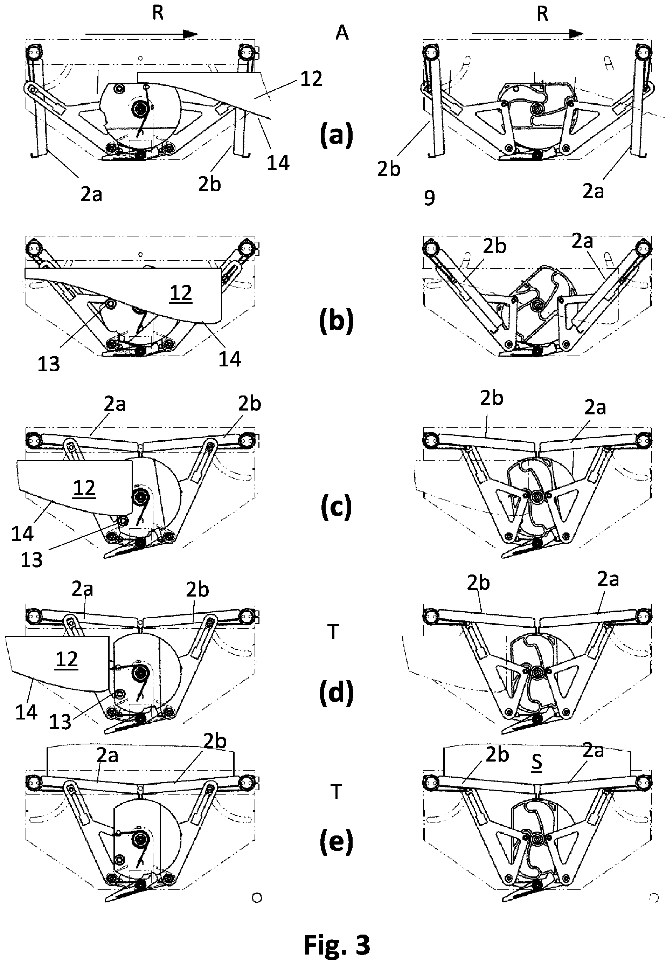

Während des Abwurfs des Stückgut S aus dem Transportbehälter bewegt sich der Transportbehälter mit geöffneten Klappen 2a, 2b weiter in der Transportrichtung R entlang der Transportbahn. Nach Abwurf des Stückguts S an einer Entladestation wird der Transportbehälter von seiner Abwurfstellung A zurück in seine Transportstellung T gebracht, indem die beiden Klappen 2a, 2b geschlossen werden. Das Schließen der Klappen 2 wird nachfolgend anhand Figur 3 erläutert.

Zum Schließen der Klappen 2 ist an der Transportbahn eine Kulissenführung mit einer Kulisse 12 vorgesehen, die über eine Rampe mit einer schräg verlaufenden und/oder bogenförmigen Anschlagfläche 14 verfügt. Die Kulisse 12 ist dabei an der Transportbahn stromabwärts einer oder jeder Entladestation angeordnet und ragt in den Transportweg des Transportbehälters so weit hinein, dass die Anschlagfläche 14 der Kulisse 12 in Kontakt mit dem Anschlagelement 13 der Kurvenscheibe 5 kommt, wenn der Transportbehälter in Transportrichtung R an der Kulisse 12 vorbeifährt, wie in Figur 3a und 3b gezeigt. Wenn die Anschlagfläche 14 der Kulisse 12 in Kontakt mit dem Anschlagelement 13 der Kurvenscheibe 5 kommt, wie in Figur 3b gezeigt, wird die Kurvenscheibe 5 in einer zweiten Drehrichtung in Rotation versetzt. Die zweite Drehrichtung ist dabei entgegengesetzt zur ersten Drehrichtung beim Öffnen der Klappen und zeigt in der Ansicht von Figur 1A entgegen dem Uhrzeigersinn. Durch die Drehung der Kurvenscheibe 5 in der zweiten Drehrichtung rollen die Führungsrollen 11 der beiden Stellhebel 4a und 4b an der jeweils zugeordneten Führungsfläche 6a, 6b der Kurvenscheibe 5 ab, wodurch die Stellhebel 4a, 4b angehoben und die beiden Klappen 2a, 2b aus ihrer geöffneten Stellung nach oben verschwenkt werden. In Figur 3b ist eine Zwischenstellung der beiden Klappen 2a, 2b gezeigt.

Die Kurvenscheibe 5 wird von der Kulisse 12 solange in der zweiten Drehrichtung gedreht, bis sie ihre Grundstellung erreicht hat. Zweckmäßig dreht die Kulisse 12 die Kurvenscheibe danach noch leicht über die Grundstellung hinaus, wie in Figur 3c gezeigt. Sobald sich die Kurvenscheibe 5 in ihrer Grundposition befindet, rastet die vorgespannte Klinke 9 in die Einkerbung 16 am Außenumfang der Kurvenscheibe 5 ein, wodurch die Kurvenscheibe 5 in ihrer Grundposition verriegelt wird. In dieser Position der Kurvenscheibe befinden sich die beiden Klappen 2a, 2b in ihrer Transportstellung T und die Führungsrollen der beiden Stellhebel 4a, 4b liegen jeweils an dem weiteren Halteabschnitt 6" der jeweils zugeordneten Führungsfläche 6a, 6b an, wie in Figur 3d gezeigt. Dadurch werden die an den Stellhebeln 4a, 4b gekoppelten Klappen 2a, 2b in ihrer Transportstellung T gehalten.

Während der gesamten Bewegung der Klappen 2a, 2b von der Abwurfstellung A (die in Figur 3a gezeigt ist) in die Transportstellung T (die in den Figuren 3d und 3e gezeigt ist) werden die Führungsrollen 11 der beiden Stellhebel 4a, 4b an der jeweils zugeordneten Führungsfläche 6a, 6b der Kurvenscheibe 5 geführt. Beim Anheben der beiden Klappen 2a, 2b werden die an der Unterseite der Klappen angeordneten Zapfen 22 in dem gebogenen Langloch 21 des Tragrahmens 1 nach oben geführt, bis sich die beiden Klappen 2a, 2b in ihrer geschlossenen Position befinden, in der die Klappen zumindest im Wesentlichen eine horizontale Lage einnehmen und zur Aufnahme eines Stückguts S bereitstehen (wie in Figur 3d gezeigt). In der Transportstellung T kann der Transportbehälter dann an einer in Transportrichtung R nachfolgenden Ladestation wieder neu mit einem Stückgut S beladen werden, wie in Figur 3e gezeigt.

Der erfindungsgemäße Transportbehälter ermöglicht bei einem kompakten Aufbau aus wenigen Bauteilen ein sicheres und schonendes Öffnen und Schließen der oder jeder Klappe bei geringer Geräuschentwicklung. Das Öffnen der oder jeder Klappe kann dabei durch das Entriegeln und Drehen der Kurvenscheibe innerhalb einer sehr schnellen Öffnungszeit von 150 ms oder weniger erfolgen, bevorzugt innerhalb von weniger als 100 ms. Das Schließen der Klappen kann mittels der Kulissenführung materialschonend über eine längere Schließszeit im Bereich von 300 ms bis 500 ms, insbesondere zwischen 400 ms und 450 ms erfolgen. Die Schließszeit kann dabei durch die Länge der Kulisse 12, insbesondere durch die Erstreckung der Führungsfläche 14 der Kulisse 12 entlang der Transportrichtung R und/oder durch die Steigung der Führungsfläche 14 eingestellt werden.

## Patentansprüche

1. Transportbehälter für eine Sortiervorrichtung, insbesondere für einen Fallklappensorter, umfassend einen Tragrahmen (1), mindestens eine verschwenkbar an dem Tragrahmen (1) angeordnete Klappe (2) und eine Stellvorrichtung (3), welche mit der mindestens einen Klappe (2) gekoppelt ist, um die Klappe (2) zwischen einer Transportstellung (T) zum Transportieren eines Stückguts (S) und einer Abwurfstellung (A) zum Abwerfen des Stückguts (S) zu bewegen, wobei die Stellvorrichtung (3) mindestens einen mit der mindestens einen Klappe (2) gekoppelten Stellhebel (4) umfasst, **gekennzeichnet durch** eine am Tragrahmen (1) drehbar gelagerte Kurvenscheibe (5) mit mindestens einer Führungsfläche (6), an welcher der mindestens eine Stellhebel (4) während der gesamten Bewegung der Klappe (2) von der Transportstellung (T) in die Abwurfstellung (A) und/oder während einer gesamten Rückbewegung von der Abwurfstellung (A) in die Transportstellung (T) geführt ist.

2. Transportbehälter nach Anspruch 1, **gekennzeichnet durch** eine erste Klappe (2a) und eine zweite Klappe (2b), welche jeweils um eine Schwenkachse (7), die insbesondere senkrecht zu einer vorgesehenen Transportrichtung (R) des Transportbehälters steht, schwenkbar an dem Tragrahmen (1) angeordnet sind, wobei der ersten Klappe (2a) ein erster Stellhebel (4a) und der zweiten Klappe (2b) ein zweiter Stellhebel (4b) zugeordnet ist und die Kurvenscheibe (5) eine erste Führungsfläche (6a) zur Führung des ersten Stellhebels (4a) und eine zweite Führungsfläche (6b) zur Führung des zweiten Stellhebels (4b) aufweist.

3. Transportbehälter nach einem der voranstehenden Ansprüche, **dadurch gekennzeichnet, dass** die Kurvenscheibe (5) durch ein Spannelement oder ein Federelement (8) in einer Grundposition vorgespannt ist, wobei sich die mindestens eine Klappe (2) in der Grundposition der Kurvenscheibe (5) in ihrer Transportstellung (T) befindet.

4. Transportbehälter nach einem der voranstehenden Ansprüche, **dadurch gekennzeichnet, dass** die Kurvenscheibe (5) durch ein Sicherungselement (9), insbesondere durch eine vorgespannte Klinke, in einer Grundposition gehalten ist, wobei sich die mindestens eine Klappe (2) in der Grundposition der Kurvenscheibe (5) in ihrer Transportstellung (T) befindet.

5. Transportbehälter nach Anspruch 4, **gekennzeichnet durch** ein Auslöseelement (10), welches das Sicherungselement (9) löst, wenn der Transportbehälter in einer vorgesehenen Transportrichtung (R) an dem Auslöseelement (10) vorbeifährt, wobei das Auslöseelement (10) insbesondere an einer Transportbahn der Sortiervorrichtung angeordnet ist, insbesondere stromaufwärts einer Entladestation, an welcher der Transportbehälter das transportierte Stückgut (S) durch Bewegung der mindestens einen Klappe (2) oder jeder Klappe (2a, 2b) in die Abwurfstellung (A) abwirft und/oder wobei das Auslöseelement (10) insbesondere als beweglicher Bolzen ausgebildet ist und insbesondere magnetbetätigt von einer passiven Grundstellung in eine aktive Funktionsstellung bewegbar ist.

6. Transportbehälter nach einem der voranstehenden Ansprüche, **dadurch gekennzeichnet, dass** der mindestens eine Stellhebel (4), insbesondere der erste Stellhebel (4a) und der zweite Stellhebel (4b), ein Führungselement (11), insbesondere eine Führungsrolle, aufweist, welches während der gesamten Bewegung der Klappe (2), insbesondere der ersten Klappe (2a) und/oder der zweiten Klappe (2b), von der Transportstellung (T) in die Abwurfstellung (A) und/oder während einer gesamten Rückbewegung von der Abwurfstellung (A) in die Transportstellung (T) an der zugeordneten Führungsfläche (6), insbesondere der ersten Führungsfläche (6a) oder der zweiten Führungsfläche (6b), anliegt.

7. Transportbehälter nach einem der voranstehenden Ansprüche, **dadurch gekennzeichnet, dass** die mindestens eine Führungsfläche (6), insbesondere die erste Führungsfläche (6a) und die zweite Führungsfläche (6b), durch einen Vorsprung oder einen Rücksprung an der Oberfläche der Kurvenscheibe (5) oder am Außenumfang der Kurvenscheibe (5) ausgebildet ist und/oder dass die mindestens eine Führungsfläche (6), insbesondere die erste Führungsfläche (6a) und die zweite Führungsfläche (6b), Bestandteil einer Ausnehmung oder einer Öffnung in der Kurvenscheibe (5) ist.

8. Transportbehälter nach einem der voranstehenden Ansprüche, **dadurch gekennzeichnet, dass** die mindestens eine Führungsfläche (6), insbesondere die erste Führungsfläche (6a) und die zweite Führungsfläche (6b), einen Führungsbereich (6') und einen Haltebereich (6") umfasst, wobei der Führungsbereich (6') leicht konvex gewölbt und der Haltebereich (6") teilkreisförmig, insbesondere halbkreisförmig ausgebildet und bevorzugt in Bezug auf den Führungsbereich (6') zurückversetzt ist, wobei insbesondere ein an dem mindestens einen Stellhebel (4) angeordnetes Führungselement (11), insbesondere eine Führungsrolle, während der Bewegung der mindestens einen Klappe (2) von der Transportstellung (T) in die Abwurfstellung (A) an dem Führungsbereich (6') der Führungsfläche (6) anliegt und in der Abwurfstellung (A) in dem Haltebereich (6") der Führungsfläche (6) steht.

9. Transportbehälter nach einem der voranstehenden Ansprüche, **gekennzeichnet durch** eine Kulisse (12), welche zum Zurückbewegen der mindestens einen Klappe (2) von der Abwurfstellung (A) in die Transportstellung (T) mit einem an der Kurvenscheibe (5) angeordneten Anschlagelement (13) zusammenwirkt.

10. Transportbehälter nach Anspruch 9, **dadurch gekennzeichnet, dass** die Kulisse (12) an einer Transportbahn der Sortiervorrichtung angeordnet ist, insbesondere stromabwärts einer Entladestation, an welcher der Transportbehälter das transportierte Stückgut (S) durch Bewegung der oder jeder Klappe (2a, 2b) in die Abwurfstellung (A) abwirft und/oder wobei das Anschlagelement (13) exzentrisch auf der Kurvenscheibe (5) angeordnet ist.

11. Transportbehälter nach einem der Ansprüche 9 oder 10, **dadurch gekennzeichnet, dass** die Kulisse (12) eine Rampe mit einer zu einer horizontalen Ebene geneigten oder gewölbten Anschlagfläche (14) aufweist, an der das Anschlagelement (13) der Kurvenscheibe (5) zur Anlage kommt, wenn der Transportbehälter in einer vorgesehenen Transportrichtung (R) an der Kulisse (12) vorbeifährt und/oder wobei die Kurvenscheibe (5) durch das Zusammenwirken der Kulisse (12) und des Anschlagelements (13) in Drehung versetzt wird, wenn der Transportbehälter in einer vorgesehenen Transportrichtung (R) an der Kulisse (12) vorbeifährt.

12. Sortiervorrichtung, insbesondere Fallklappensorter, umfassend zumindest einen Transportbehälter nach einem der voranstehenden Ansprüche.

13. Verfahren zum Öffnen und/oder Schließen eines Transportbehälters für eine Sortiervorrichtung, insbesondere für einen Fallklappensorter, wobei der Transportbehälter einen Tragrahmen (1), mindestens eine verschwenkbar an dem Tragrahmen (1) angeordnete Klappe (2) und mindestens einen Stellhebel (4) umfasst, welcher mit der mindestens einen Klappe (2) gekoppelt ist, **dadurch gekennzeichnet dass** die mindestens eine Klappe (2) von einer Transportstellung (T) zum Transportieren eines Stückguts (S) in eine Abwurfstellung (A) zum Abwerfen des Stückguts (S), oder zurück, durch Drehen einer am Tragrahmen (1) drehbar gelagerten Kurvenscheibe (5) mit mindestens einer Führungsfläche (6) bewegt wird, wobei der mindestens eine Stellhebel (4) während der gesamten Bewegung der Klappe (2) von der Transportstellung (T) in die Abwurfstellung (A) und/oder während der gesamten Rückbewegung von der Abwurfstellung (A) in die Transportstellung (T) an der Führungsfläche (6) geführt wird.

14. Verfahren nach Anspruch 13, **dadurch gekennzeichnet, dass** zum Öffnen des Transportbehälters die in einer Grundposition vorgespannte und/oder verriegelte Kurvenscheibe (5) entriegelt wird, wodurch sich die Kurvenscheibe (5) selbsttätig in einer ersten Drehrichtung in Drehung versetzt und die mindestens eine Klappe (2) aufgrund der Kopplung der Klappe (2) mit dem mindestens einen Stellhebel (4) und der Führung des Stellhebels (4) an der mindestens einen Führungsfläche (6) von der Transportstellung (T) in die Abwurfstellung (A) bewegt wird.

15. Verfahren nach Anspruch 13 oder 14, **dadurch gekennzeichnet, dass** zum Schließen des Transportbehälters die Kurvenscheibe (5) von einer an einem exzentrischen Anschlagelement (13) angreifenden Kulissenführung in einer zweiten Drehrichtung entgegengesetzt zur ersten Drehrichtung in Drehung versetzt und die mindestens eine Klappe (2) aufgrund der Kopplung mit dem mindestens einen Stellhebel (4) und der Führung des Stellhebels (4) an der mindestens einen Führungsfläche (6) von der Abwurfstellung (A) in die Transportstellung (T) bewegt wird.
